# EUROPÄISCHE PATENTSCHRIFT

(11) **EP 2 450 571 B1**
(45) Veröffentlichungstag und Bekanntmachung des Hinweises auf die Patenterteilung: **26.03.2014**
(21) Anmeldenummer: 11008250.0
(22) Anmeldetag: 13.10.2011
(51) Int. Cl.: F03D 11/00, H01R 39/08, F03D 11/02

(54) **Schleifringeinheit und Verwendung der Schleifringeinheit in einer Windkraftanlage**
Slip ring unit and use of the slip ring unit in a wind power assembly
Unité de bague collectrice et utilisation de l'unité de bague collectrice dans une éolienne

(30) Priorität: 04.11.2010 DE 102010050469
(43) Veröffentlichungstag der Anmeldung: 09.05.2012
(73) Patentinhaber: LTN Servotechnik GmbH, 83624 Otterfing (DE)
(72) Erfinder: Angerpointner, Ludwig, 81247 München (DE); Bardeleben, Erwin, 81379 München (DE)
(74) Vertreter: Hofmann, Ernst

(56) Entgegenhaltungen:
- WO-A1-2010/048957
- DE-A1- 10 003 900
- DE-A1- 10 155 221
- DE-U1- 29 705 011
- JP-A- 4 161 039
- US-A1- 2007 108 776

## Beschreibung

Die Erfindung betrifft eine Schleifringeinheit zum Übertragen von elektrischen Strömen zwischen zwei relativ zueinander drehbaren Bauteilgruppen, gemäß dem Anspruch 1 sowie die Verwendung einer derartigen Schleifringeinheit in einer Windkraftanlage, gemäß dem Anspruch 11.

Schleifringeinheiten bestehen üblicherweise unter anderem aus zwei Bauteilgruppen, nämlich einem Stator und einem Rotor. Der Stator umfasst häufig Schleifringbürsten, wogegen der Rotor meist eine Folge von Schleifringen aufweist. Im Betrieb haben dann die Schleifringbürsten gleitenden Kontakt zu den Mantelseiten der rotierenden Schleifringe. Derartige Schleifringeinheiten werden in vielen technischen Gebieten eingesetzt, um elektrische Signale oder elektrische Leistung von einer ortsfesten auf eine sich drehende elektrische Einheit zu übertragen.

Beispielsweise werden derartige Schleifringeinheiten in der Rotornabe oder der Gondel von Windkraftantagen eingebaut, etwa zur Übertragung von elektrischen Strömen für die Antriebe zur Verstellung der Anstellwinkel der Rotorblätter.

In der Offenlegungsschrift DE 101 55 221 A1 ist eine Anordnung zur Vermeidung von Überhitzungen in einem Schleifringraum bekannt, bei der Kühlluft ohne bauliche Behinderungen in eine Schleifringkapsel einströmen kann. Hierzu wird unter Verwendung eines Lüfterrades eines Motors Luft durch die Schleifringkapsel gesaugt.

Der Erfindung liegt die Aufgabe zugrunde, eine Schleifringeinheit zu schaffen, welche eine überaus hohe Zuverlässigkeit bzw. Laufleistung aufweist. Insbesondere können die vorteilhaften Eigenschaften der Schleifringeinheit bei Verwendung in einer Gondel einer Windkraftanlage zum Tragen kommen.

Diese Aufgabe wird erfindungsgemäß durch die Merkmale des Anspruchs 1 bzw. 11 gelöst.

Bei der Schleifringeinheit zum Übertragen von elektrischen Strömen zwischen einer ersten und einer zweite Bauteilgruppe sind die beiden Bauteilgruppen relativ zueinander um eine Achse drehbar angeordnet. Die erste Bauteilgruppe, z. B. ein Stator, umfasst zumindest eine Schleifringbürste und die zweite Bauteilgruppe, z. B. ein Rotor, zumindest einen Schleifring. Die Schleifringbürste und der Schleifring berühren sich in einem Innenraum eines Gehäuses der Schleifringeinheit, so dass der entsprechende Schleifkontakt gegenüber Umwelteinflüssen geschützt ist. Die Schleifringeinheit weist weiterhin eine Luftfördereinrichtung und einen Filter auf, wobei durch die Luftfördereinrichtung Umgebungsluft durch den Filter hindurch zur Abtrennung von Verunreinigungen förderbar ist und die gefilterte Luft in den Innenraum einleitbar ist, so dass ein Druck im Innenraum des Gehäuses erzeugbar ist, der über dem Druck der Umgebungsluft liegt.

Als elektrische Ströme sind im Folgenden Ströme zu verstehen, die zur Übertragung von elektrischer Leistung erforderlich sind aber auch Ströme die als Signale ausgebildet sind und lediglich zur Übertragung von Informationen dienen.

Mit Vorteil ist die Schleifringeinheit derart konfiguriert, dass zwischen den relativ zueinander drehbaren Bauteilgruppen ein Wälzlager angeordnet ist, welches einen Außendurchmesser aufweist, wobei die Luftfördereinrichtung zumindest teilweise innerhalb des Außendurchmessers angeordnet ist. Die Luftfördereinrichtung liegt also zumindest teilweise innerhalb eines gedachten zylindrischen Raumes mit dem besagten Außendurchmesser. Häufig entspricht der Außendurchmesser des Wälzlagers dem Außendurchmesser eines Außenrings des Wälzlagers. Insbesondere kann die Luftfördereinrichtung im Innenraum des Gehäuses angeordnet sein. Mit Vorteil ist die Schleifringeinheit derart konfiguriert, dass diese axial beabstandete Wälzlager aufweist, wobei die Luftfördereinrichtung zumindest teilweise innerhalb des axialen Abstandes der Wälzlager angeordnet ist.

Die Schleifringeinheit kann so ausgestaltet sein, dass der Innenraum vom statorseitigen Gehäuse und einem Rotorteil, beispielsweise einer Welle, sowie durch ein oder mehrere Wälzlager begrenzt ist. Vorzugsweise kann das eine Wälzlager oder können die mehreren Wälzlager jeweils eine Dichtung umfassen, so dass die durch das Wälzlager entweichbare Luft minimiert ist.

In weiterer Ausgestaltung der Erfindung kann die Luftfördereinrichtung der ersten Bauteilgruppe zugeordnet sein und die zweite Bauteilgruppe kann ein weiteres Bauelement aufweisen. Dabei kann die Schleifringeinheit so konfiguriert sein, dass die Luftfördereinrichtung über eine mechanische Ankopplung der Luftfördereinrichtung an das Bauelement antreibbar ist. Zur mechanischen Ankopplung kann beispielsweise ein Getriebe, insbesondere Kurvengetriebe oder Drehgelenkgetriebe bzw. Koppelgetriebe aber auch eine Taumelscheibe verwendet werden. Alternativ zur mechanischen Ankopplung umfasst die Erfindung auch Schleifringeinheiten, bei denen die Luftfördereinrichtung durch einen elektrischen Antrieb betreibbar ist.

In weiterer Ausgestaltung der Erfindung weist das Bauelement zur mechanischen Ankopplung der Luftfördereinrichtung eine umlaufende Wirkfläche auf, die entlang ihres Umfangs unterschiedliche Abstände zur Achse aufweist. Mit anderen Worten ist also das Bauelement so ausgestaltet, dass verschiedene Punkte existieren, die in Umfangsrichtung beabstandet auf der Wirkfläche angeordnet sind, deren Abstände zu Achse unterschiedlich groß sind.

Weiterhin kann das Bauelement relativ zur ersten Bauteilgruppe, insbesondere um die Achse, drehbar sein. Die Schleifringeinheit kann derart konfiguriert sein, dass das Bauelement relativ zur ersten Bauteilgruppe mit einer Drehzahl drehbar ist, welche gleich der Drehzahl des zumindest einen Schleifrings ist. Ein derartig ausgestaltetes Bauelement kann beispielsweise als Nockenscheibe, Exzenterscheibe oder Kurvenscheibe ausgestaltet sein. Mit Vorteil kann das Bauelement eine axial durchgängige Bohrung aufweisen, so dass demgemäß auch von einem Nockenring, einem Exzenterring oder einem Kurvenscheibenring gesprochen werden kann.

Mit Vorteil ist der Schleifring entlang einer Fläche, insbesondere einer zylindrischen Mantelfläche, durch die Schleifringbürste kontaktierbar, wobei dann die Wirkfläche zur mechanischen Ankopplung der Luftfördereinrichtung parallel zur Fläche orientiert sein kann. Diese Fläche ist in der Regel ein umlaufender Streifen auf der äußeren Mantelfläche des Schleifrings, wobei sich die axiale Ausdehnung dieses Streifens gegen Null minimieren lässt. Die Parallelität der Wirkfläche zur Fläche, entlang welcher die Schleifringbürste den Schleifring kontaktiert, kann beispielsweise derart verwirklicht werden, dass die betreffenden Flächen jeweils auf einer Zylindermantelseite liegen, wobei die Achsen der beiden Zylindermantelseiten parallel zueinander orientiert sind. Dabei können die betreffenden Zylinder unterschiedliche Durchmesser aufweisen und / oder deren Achsen können versetzt sein.

In Weiterbildung der Erfindung kann die Schleifringeinheit so konfiguriert sein, dass die zweite Bauteilgruppe mehrere Schleifringe aufweist, die mit axialem Abstand aneinandergereiht sind und das Bauelement in die Folge der Schleifringe eingereiht ist. Die Folge der Schleifringe erstreckt sich dementsprechend entlang einer axialen Länge. Die Schleifringeinheit kann weiterhin so ausgestaltet sein, dass die Luftfördereinrichtung zumindest teilweise innerhalb dieser axialen Länge angeordnet ist.

Alternativ können bei Verwendung einer Taumelscheibe zur mechanischen Ankopplung entsprechend axial gerichtete Hubbewegungen der Luftfördereinrichtung erzeugt werden.

Besonders vorteilhaft kann es sein, wenn die Luftfördereinrichtung als Verdrängerpumpe, insbesondere als oszillierende Pumpe, insbesondere als Membranverdichter ausgestaltet ist.

Weiterhin kann zwischen den relativ zueinander drehbaren Bauteilgruppen ein Wälzlager angeordnet sein, welches eine Dichtung aufweist.

Mit Vorteil ist die Schleifringeinheit so konfiguriert, dass ein vergleichsweise geringer Volumen- bzw. Massenstrom an gefilterter Umgebungsluft in den Innenraum gefördert wird. Dies wird einerseits durch die Bauweise der Luftfördereinrichtung mit geringer Fördermenge und die hochwirksame Abdichtung des Innenraums erreicht. Jedenfalls wird in vorteilhafter Ausgestaltung der Erfindung das Luftvolumen oder die Luftmasse, die vom Innenraun eingeschlossen wird, pro Stunde nicht mehr als zweimal, mit Vorteil weniger als einmal komplett ausgetauscht. Diese Betrachtung bezieht sich insbesondere auf einen stationären Betriebszustand.

Gemäß einem weiteren Aspekt der Erfindung kann die Schleifringeinheit in einer Gondel einer Windkraftanlage verwendet werden, insbesondere zur Übertragung von Strömen für Elektroantriebe einer Rotorblattverstellung. Derartige Windkraftanlagen sind häufig in Umgebungen, z. B. in ariden Gebieten, installiert, die gerade bei Vorherrschen von größeren Windgeschwindigkeiten eine erhöhte Konzentration von Partikeln als Verunreinigungen in der Umgebungsluft aufweisen. In diesen Umgebungen kann die Lebensdauer herkömmlicher Schleifringeinheiten reduziert sein.

Vorteilhafte Ausbildungen der Erfindung entnimmt man den abhängigen Ansprüchen.

Weitere Einzelheiten und Vorteile der erfindungsgemäßen Schleifringeinheit ergeben sich aus der nachfolgenden Beschreibung eines Ausführungsbeispieles anhand der beiliegenden Figuren.

Es zeigen die
- Figur 1: eine Längsschnittdarstellung einer Schleifringeinheit,
- Figur 2: eine Querschnittdarstellung der Schleifringeinheit gemäß der Ansicht A - A.

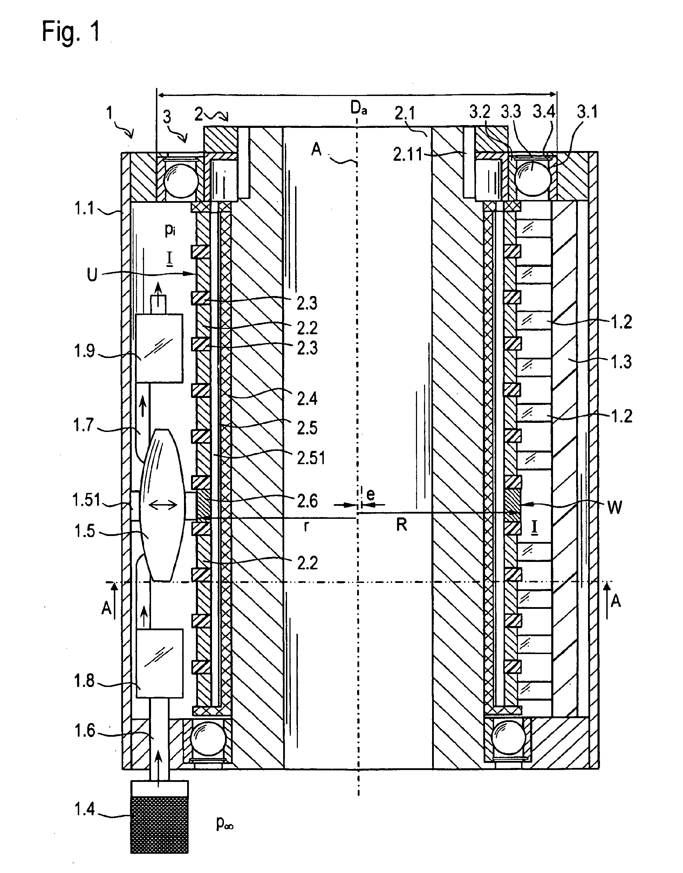

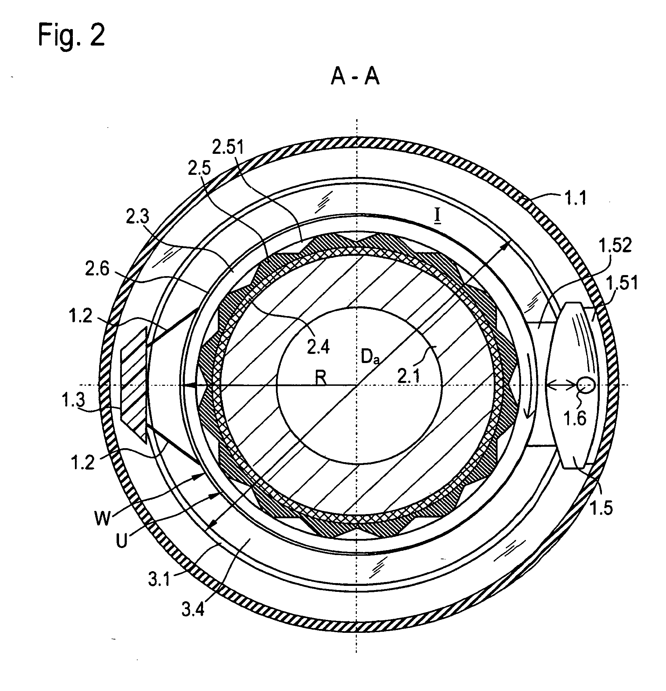

Gemäß den Figuren 1 und 2 umfasst die erfindungsgemäße Schleifringeinheit eine erste Bauteilgruppe, die als Stator 1 bezeichnet werden kann und eine zweite Bauteilgruppe, im Folgenden Rotor 2 genannt. Die Schleifringeinheit dient zum Übertragen von elektrischen Strömen zwischen dem Rotor 2 und dem Stator 1, wobei der Rotor 2 und der Stator 1 relativ zueinander um eine Achse A drehbar angeordnet sind.

Der Rotor 2 umfasst eine Welle 2.1, die im vorliegenden Beispiel als Hohlwelle ausgestaltet ist. Radial außerhalb der Welle 2.1 befindet sich zunächst ein im Wesentlichen rohrförmiges Bauteil 2.4, welches beispielsweise aus Aluminium hergestellt sein kann. Daran weiterhin radial außerhalb anschließend ist ein Trägerrohr 2.5 angeordnet, das in Axialrichtung verlaufende Ausnehmungen 2.51 aufweist.

Am elektrisch isolierenden Trägerrohr 2.5, das vorzugsweise aus Kunststoff oder Keramik hergestellt sein kann, sind verdrehsicher Schleifringe 2.2 befestigt, die durch elektrisch isolierende Ringe 2.3 mit axialem Abstand axial voneinander getrennt sind. Der Übersichtlichkeit halber wurde in den Figuren auf die Darstellung von elektrischen Leitungen verzichtet. Dem ungeachtet ist im Ausführungsbeispiel jeder der mit axialem Abstand aneinandergereihten Schleifringe 2.2 an seiner Innenseite mit einer elektrischen Leitung verbunden, die jeweils längs einer Ausnehmung 2.51 in Axialrichtung im Rotor 2 verlegt wird und den Rotor 2 durch eine der Rillen 2.11 an einem axialen Ende der Welle 2.1 verlässt. Üblicherweise werden die Rillen 2.11 nach Verlegung der elektrischen Leitungen mit Vergussmasse hermetisch abgedichtet.

Neben den Schleifringen 2.2 ist an dem Trägerrohr 2.5 drehfest ein Bauelement 2.6 montiert, welches im vorgestellten Ausführungsbeispiel im Wesentlichen ringförmig ausgestaltet ist. Die Anordnung ist so ausgestaltet, dass das Bauelement 2.6 in die Folge der Schleifringe 2.2 eingereiht ist. Die nach innen weisende Fläche des Bauelements 2.6 verläuft entlang einer Kreislinie, deren Mittelpunkt mit der Achse A zusammenfällt. Somit weist also die nach innen weisende Fläche, bzw. innere Fläche, des Bauelements 2.6 den gleichen Durchmesser auf wie der innere Durchmesser der Schleifringe 2.2. Die äußere Fläche bzw. die Wirkfläche des Bauelements 2.6 weist dagegen entlang ihres Umfangs unterschiedliche Abstände r, R zur Achse A auf. Insbesondere kann die Wirkfläche ebenfalls entlang einer Kreislinie verlaufen, wobei der Mittelpunkt dieser Kreislinie um eine Exzentrizität e gegenüber der Achse A versetzt angeordnet ist. Entsprechend kann in diesem Fall das Bauelement 2.6 als Exzenterring bezeichnet werden.

Der Stator 1 weist einen Halter 1.3 aus einem isolierenden Werkstoff auf. An dem Halter 1.3 sind Schleifringbürsten 1.2 befestigt, welche dem Stator 1 zuzuordnen sind und federnd die Schleifringe 1.2 berühren. Sowohl die Schleifringbürsten 1.2 als auch die Schleifringe 2.2 sind zum Schutz gegenüber Umgebungseinflüssen im Innenraum I eines Gehäuses 1.1 angeordnet, der auch von zwei Wälzlagern 3 und der Welle 2.1 bzw. dem rohrförmigen Bauteil 2.4 begrenzt ist. Insbesondere ist derjenige Bereich, in welchem sich die Schleifringbürsten 1.2 und die Schleifringe 2.2 berühren, im Innenraum I des Gehäuses angeordnet. Im Übrigen wurde in den Figuren auch auf die Darstellungen der statorseitigen elektrischen Leitungen verzichtet.

Weiterhin umfasst der Stator 1 eine Luftfördereinrichtung 1.5, die im vorgestellten Ausführungsbeispiel als eine komprimierbare Membranpumpe ausgestaltet ist und ihrerseits einen Montagefuß 1.51 sowie einen konkaven Aufnahmekörper 1.52 umfasst. Die Luftfördereinrichtung 1.5 ist im Innenraum I des Gehäuses 1.1 angeordnet. Durch die permanente Berührung des ringförmigen Bauelements 2.6 mit dem Aufnahmekörper 1.52 der radial vorgespannten Luftfördereinrichtung 1.5 ist die Luftfördereinrichtung 1.5 mit dem Bauelement 2.6 derart in Wirkverbindung gebracht, dass die umlaufende Wirkfläche W bei Rotation des ringförmigen Bauelements 2.6 eine radiale Hubbewegung gemäß dem Doppelpfeil in den Figuren erzeugt. Die radiale Vorspannung der Luftfördereinrichtung 1.5 kann beispielsweise durch eine Feder im Inneren der Luftfördereinrichtung 1.5 erreicht werden, so dass ein permanenter Kontakt der Luftfördereinrichtung 1.5 mit dem Bauelement 2.6 gewährleistet ist und eine Hubbewegung sowohl in Richtung zur Achse A hin als auch entgegen dieser Richtung möglich ist.

Auf der Saugseite der Luftfördereinrichtung 1.5 befindet sich ein Filter 1.4, der zur Abtrennung von Verunreinigungen in der Umgebungsluft dient. Der Filter 1.4 ist über eine Saugleitung 1.6 mit der Luftfördereinrichtung 1.5 verbunden, wobei zwischen dem Filter 1.4 und der Luftfördereinrichtung 1.5 ein Rückschlagventil 1.8 angeordnet ist, das für die Luft nur in Förderrichtung durchlässig ist und demnach eine Rückströmung von der Luftfördereinrichtung 1.5 zum Filter 1.4 verhindert. Weiterhin ist an der Luftfördereinrichtung 1.5 eine Druckleitung 1.7 vorgesehen, an die ebenfalls ein Rückschlagventil 1.9 montiert ist, so dass keine Luft aus dem Innenraum I des Gehäuses 1.1 zu der Luftfördereinrichtung 1.5 strömen kann. Die Druckleitung 1.7 ist zum Innenraum I hin offen.

Der Stator 1 und der Rotor 2 sind mit Hilfe der Wälzlager 3 relativ zueinander drehbar. Die Wälzlager 3 umfassen einen Außenring 3.1, einen Innenring 3.2 sowie Wälzkörper 3.3 und eine, insbesondere schleifende, Dichtung 3.4.

Die Schleifringeinheit kann gemäß dem Ausführungsbeispiel in der Gondel einer Windkraftanlage mit horizontaler Rotationsachse montiert werden. In der Gondel, die drehbar auf einem Turm gelagert ist, sind unter anderem auch ein Generator und gegebenenfalls ein Getriebe untergebracht. Die Schleifringeinheit dient zur Übertragung von elektrischen Strömen zu Elektroantrieben bzw. Elektromotoren, die zur Verstellung der Anstellwinkel der Rotorblätter verwendet werden. Derartige Antriebsmotoren sind in der Rotornabe der Windkraftanlage montiert und drehen sich folglich mit dem Windkraftanlagenrotor. Entsprechend ist der Stator 1 der Schleifringeinheit verdrehfest mit der Gondel verbunden.

Die Welle 2.1 der Schleifringeinheit dient zur Aufnahme einer Hilfswelle des Windkraftanlagenrotors, die als axiale Verlängerung der Abtriebswelle vorliegt. Demgemäß dreht sich also im produktiven Betrieb der betreffenden Windkraftanlage der Rotor 2 der Schleifringeinheit mit der Drehzahl der Abtriebswelle des Windkraftanlagenrotors. Sofern die Windkraftanlage still steht, steht auch der Rotor 2.

Wenn also im Betrieb der Windkraftanlage die Welle 2.1 der Schleifringeinheit in Drehung versetzt wird, rotiert der Rotor 2 der Schleifringeinheit um die Achse A mit der gleichen Drehzahl wie die Abtriebswelle der Windkraftanlage. Damit dreht sich auch das als Exzenterring ausgestaltete Bauelement 2.6 mit der Drehzahl der Abtriebswelle. Üblicherweise liegen bei Windkraftanlagen die maximalen Drehzahlen unter 100 min⁻¹, insbesondere unter 75 min⁻¹. Diese Drehbewegung wird durch das Zusammenspiel des Bauelements 2.6 mit der Luftfördereinrichtung 1.5 in eine Hubbewegung der Luftfördereinrichtung 1.5 gemäß dem Doppelpfeil in den Figuren umgesetzt. Somit wird die Luftfördereinrichtung 1.5 durch mechanische Ankopplung an der sich drehenden Welle 2.1 bzw. unmittelbar durch mechanische Ankopplung am Bauelement 2.6 angetrieben. Dadurch wird Umgebungsluft, die außerhalb der Schleifringeinheit den Druck p_{∞} aufweist, durch den Filter 1.4 gefördert, wobei Verunreinigungen, die in der Umgebungsluft vorliegen, z.B. Staubpartikel, den Filter 1.4 nicht passieren können, also aus der Umgebungsluft abgetrennt werden. Die gefilterte Luft wird dann durch die Saugleitung 1.6, die Luftfördereinrichtung 1.5 und die Druckleitung 1.7 sowie durch die Rückschlagventile 1.8, 1.9 in das Gehäuse 1.1 eingeleitet. Das Gehäuse 1.1 ist weitgehend abgedichtet, insbesondere tragen die Dichtungen 3.4 der Lager 3 dazu bei, dass sich bei drehender Welle 2.1 im Innenraum I des Gehäuses 1.1 ein Druck pᵢ aufbaut. Der Druck pᵢ im Innenraum I liegt entsprechend über dem Druck p_{∞} der Umgebungsluft. Da der geförderte Luftstrom, bzw. die geförderte Luftmenge durch die Ausgestaltung der Luftfördereinrichtung 1.5 vergleichsweise niedrig ist und zudem bei Drehung des Innenrings 3.1 relativ zum Außenring 3.1 die Dichtung 3.4 eine gewisse Luftmenge entweichen lässt, stellt sich der Druck pᵢ bei kontinuierlichem Betrieb auf eine konstante Größe ein. Durch diesen Druck pᵢ im Innenraum I des Gehäuses 1.1 kann wirksam verhindert werden, dass an irgendeiner Stelle der Schleifringeinheit Verunreinigungen eindringen und zum Schleifkontakt vordringen können, da sich im Innenraum I sowohl die Schleifringe 2.2 als auch die Schleifringbürsten 1.2 befinden.

Wenn danach die Windkraftanlage steht, bleibt der Druck pᵢ im Innenraum I wegen der abgedichteten Bauweise der Schleifringeinheit über geraume Zeit über dem Niveau des Drucks p_{∞} der Umgebungsluft. Daher kann auch in diesem Zustand ein Vordringen von Verunreinigungen zum Schleifkontakt vermieden werden. Zudem weisen die Dichtungen 3.4 der Wälzlager 3 eine erhöhte Dichtwirkung auf, wenn die Innenringe 3.1 relativ zu den Außenringen 3.2 stehen. Hinzu kommt, dass eventuelle Spalte zwischen den elastisch verformten Dichtungen 3.4 und den Innenringen 3.1 bzw. Außenringen 3.2 mit schwindendem Druck pᵢ im Innenraum I kleiner werden, so dass immer weniger Luft entweichen kann. Denn diese elastischen Verformungen resultieren aus der Höhe der Differenz zwischen dem Druck pᵢ im Innenraum I und dem Druck p_{∞} der Umgebungsluft und werden entsprechend der abnehmenden Differenz kleiner.

Im Hinblick auf längere Windstilleperioden ist im Übrigen auch zu berücksichtigen, dass in diesen Phasen praktisch keine Verunreinigungen, wie etwa Staubpartikel, in die Höhe der Gondel verfrachtet werden, so dass unter diesen Randbedingungen kaum ein Schaden für die Schleifringeinheit entstehen kann.

## Patentansprüche

1. Schleifringeinheit zum Übertragen von elektrischen Strömen zwischen einer ersten und einer zweiten Bauteilgruppe (1, 2), wobei die beiden Bauteilgruppen (1, 2) relativ zueinander um eine Achse (A) drehbar angeordnet sind, wobei
- die erste Bauteilgruppe (1) zumindest eine Schleifringbürste (1.2) umfasst und
- die zweite Bauteilgruppe (2) zumindest einen Schleifring (2.2) aufweist, wobei
sich die zumindest eine Schleifringbürste (1.2) und der zumindest eine Schleifring (2.2) in einem Innenraum (I) eines Gehäuses (1.1) berühren,
**dadurch gekennzeichnet, dass** die Schleifringeinheit eine Luftfördereinrichtung (1.5) und einen Filter (1.4) aufweist, wobei durch die Luftfördereinrichtung (1.5) Umgebungsluft durch den Filter (1.4) hindurch zur Abtrennung von Verunreinigungen förderbar ist und die gefilterte Luft in den Innenraum (I) einleitbar ist, so dass ein Druck (pᵢ) im Innenraum (I) des Gehäuses (1.1) erzeugbar ist, der über dem Druck (p_{∞}) der Umgebungsluft liegt.

2. Schleifringeinheit gemäß dem Anspruch 1, **dadurch gekennzeichnet, dass** zwischen den relativ zueinander drehbaren Bauteilgruppen (1, 2) ein Wälzlager (3) angeordnet ist, welches einen Außendurchmesser (Dₐ) aufweist, wobei die Luftfördereinrichtung (1.5) zumindest teilweise innerhalb des Außendurchmessers (Dₐ) angeordnet ist.

3. Schleifringeinheit gemäß einem der vorhergehenden Ansprüche, **dadurch gekennzeichnet, dass** die Luftfördereinrichtung (1.5) im Innenraum (I) des Gehäuses (1.1) angeordnet ist.

4. Schleifringeinheit gemäß einem der vorhergehenden Ansprüche, **dadurch gekennzeichnet, dass** die Luftfördereinrichtung (1.5) der ersten Bauteilgruppe (1) zugeordnet ist und die zweite Bauteilgruppe (2) ein Bauelement (2.6) aufweist, wobei die Schleifringeinheit so konfiguriert ist, dass die Luftfördereinrichtung (1.5) über eine mechanische Ankopplung der Luftfördereinrichtung (1.5) an das Bauelement (2.6) antreibbar ist.

5. Schleifringeinheit gemäß dem Anspruch 4, **dadurch gekennzeichnet, dass** das Bauelement (2.6) eine umlaufende Wirkfläche (W) aufweist, die entlang ihres Umfangs unterschiedliche Abstände (R, r) zur Achse (A) aufweist.

6. Schleifringeinheit gemäß dem Anspruch 5, **dadurch gekennzeichnet, dass** der zumindest eine Schleifring (2.2) entlang einer Fläche (U) durch die zumindest eine Schleifringbürste (1.2) kontaktierbar ist und die Wirkfläche (W) des Bauelements (2.6) parallel zur Fläche (U) orientiert ist.

7. Schleifringeinheit gemäß dem Anspruch 4, **dadurch gekennzeichnet, dass** das Bauelement (2.6) eine umlaufende Wirkfläche (W) aufweist und der zumindest eine Schleifring (2.2) entlang einer Fläche (U) durch die zumindest eine Schleifringbürste (1.2) kontaktierbar ist und die Wirkfläche (W) des Bauelements (2.6) parallel zur Fläche (U) orientiert ist.

8. Schleifringeinheit gemäß einem der Ansprüche 4, 5, 6 oder 7, **dadurch gekennzeichnet, dass** die zweite Bauteilgruppe (2) mehrere Schleifringe (2.2) aufweist, die mit axialem Abstand aneinandergereiht sind und das Bauelement (2.6) in die Folge der Schleifringe (2.2) eingereiht ist.

9. Schleifringeinheit gemäß einem der vorhergehenden Ansprüche, **dadurch gekennzeichnet, dass** die Luftfördereinrichtung (1.5) als Verdrängerpumpe, insbesondere als Membranverdichter ausgestaltet ist.

10. Schleifringeinheit gemäß einem der vorhergehenden Ansprüche, **dadurch gekennzeichnet, dass** zwischen den relativ zueinander drehbaren Bauteilgruppen (1, 2) ein Wälzlager (3) angeordnet ist, welches eine Dichtung (3.4) aufweist.

11. Verwendung der Schleifringeinheit gemäß einem der vorhergehenden Ansprüche in einer Gondel einer Windkraftanlage, insbesondere zur Übertragung von Strömen für Elektroantriebe einer Rotorblattverstellung.

## Claims

1. Slip ring unit for transmitting electric currents between a first and a second component group (1, 2), the two component groups (1, 2) being arranged such that they can be rotated relative to one another about an axis (A),
- the first component group (1) comprising at least one slip ring brush (1.2), and
- the second component group (2) having at least one
slip ring (2.2),
the at least one slip ring brush (1.2) and the at least one slip ring (2.2) being in contact in an interior space (I) of a housing (1.1),
**characterized in that** the slip ring unit has an air conveying device (1.5) and a filter (1.4), it being possible for ambient air to be conveyed by the air conveying device (1.5) through the filter (1.4) in order to separate contaminants and for the filtered air to be introduced into the interior space (I), with the result that a pressure (pᵢ) can be generated in the interior space (I) of the housing (1.1), which pressure (pᵢ) lies above the pressure (p_{∞}) of the ambient air.

2. Slip ring unit according to Claim 1, **characterized in that** an anti-friction bearing (3) is arranged between the component groups (1, 2) which can be rotated relative to one another, which anti-friction bearing (3) has an external diameter (Dₐ), the air conveying device (1.5) being arranged at least partially within the external diameter (Dₐ).

3. Slip ring unit according to one of the preceding claims, **characterized in that** the air conveying device (1.5) is arranged in the interior space (I) of the housing (1.1).

4. Slip ring unit according to one of the preceding claims, **characterized in that** the air conveying device (1.5) is assigned to the first component group (1) and the second component group (2) has a structural element (2.6), the slip ring unit being configured in such a way that the air conveying device (1.5) can be driven via a mechanical coupling of the air conveying device (1.5) to the structural element (2.6).

5. Slip ring unit according to Claim 4, **characterized in that** the structural element (2.6) has a circumferential active face (W) which is at different spacings (R, r) from the axis (A) along its circumference.

6. Slip ring unit according to Claim 5, **characterized in that** the at least one slip ring (2.2) can be contacted along a face (U) by the at least one slip ring brush (1.2), and the active face (W) of the structural element (2.6) is oriented parallel to the face (U).

7. Slip ring unit according to Claim 4, **characterized in that** the structural element (2.6) has a circumferential active face (W), and the at least one slip ring (2.2) can be contacted along a face (U) by the at least one slip ring brush (1.2), and the active face (W) of the structural element (2.6) is oriented parallel to the face (U).

8. Slip ring unit according to one of Claims 4, 5, 6 or 7, **characterized in that** the second component group (2) has a plurality of slip rings (2.2) which are lined up in a row at an axial spacing and the structural element (2.6) is introduced into the sequence of the slip rings (2.2).

9. Slip ring unit according to one of the preceding claims, **characterized in that** the air conveying device (1.5) is configured as a positive displacement pump, in particular as a diaphragm compressor.

10. Slip ring unit according to one of the preceding claims, **characterized in that** an anti-friction bearing (3) which has a seal (3.4) is arranged between the component groups (1, 2) which can be rotated relative to one another.

11. Use of the slip ring unit according to one of the preceding claims in a nacelle of a wind power plant, in particular for the transmission of currents for electric drives of a rotor blade adjusting means.

## Revendications

1. Unité de bagues collectrices pour transmettre des courants électriques entre un premier et un deuxième groupe de composants (1, 2), les deux groupes de composants (1, 2) étant disposés de manière à pouvoir tourner relativement l'un par rapport à l'autre autour d'un axe (A),
- le premier groupe de composants (1) comportant au moins un balai de bague collectrice (1.2) et
- le deuxième groupe de composants (2) comprenant au moins une bague collectrice (2.2),
l'au moins un balai de bague collectrice (1.2) et l'au moins une bague collectrice (2.2) étant en contact dans un espace intérieur (I) d'un boîtier (1.1),
**caractérisée en ce que** l'unité de bagues collectrices comprend un dispositif de transport d'air (1.5) et un filtre (1.4), de l'air ambiant pouvant être transporté au moyen du dispositif de transport d'air (1.5) à travers le filtre (1.4) pour séparer des impuretés et l'air filtré pouvant être introduit dans l'espace intérieur (I) de telle sorte qu'une pression (pᵢ) puisse être produite dans l'espace intérieur (I) du boîtier (1.1), Laquelle est supérieure à la pression (p_{∞}) de l'air ambiant.

2. Unité de bagues collectrices selon la revendication 1, **caractérisée en ce qu'**un palier à roulement (3) est disposé entre les groupes de composants (1, 2) pouvant tourner relativement l'un par rapport à l'autre, lequel palier à roulement présente un diamètre extérieur (Dₐ), le dispositif de transport d'air (1.5) étant disposé au moins partiellement à l'intérieur du diamètre extérieur (Dₐ).

3. Unité de bagues collectrices selon l'une quelconque des revendications précédentes, **caractérisée en ce que** le dispositif de transport d'air (1.5) est disposé dans l'espace intérieur (I) du boîtier (1.1).

4. Unité de bagues collectrices selon l'une quelconque des revendications précédentes, **caractérisée en ce que** le dispositif de transport d'air (1.5) est associé au premier groupe de composants (1) et le deuxième groupe de composants (2) comprend un élément structural (2.6), l'unité de bagues collectrices étant configurée de telle sorte que le dispositif de transport d'air (1.5) puisse être entraîné par le biais d'un accouplement mécanique du dispositif de transport d'air (1.5) à l'élément structural (2.6).

5. Unité de bagues collectrices selon la revendication 4, **caractérisée en ce que** l'élément structural (2.6) comprend une surface active périphérique (W) qui présente le long de sa périphérie différentes distances (R, r) par rapport à l'axe (A).

6. Unité de bagues collectrices selon la revendication 5, **caractérisée en ce que** l'au moins une bague collectrice (2.2) peut être mise en contact le long d'une surface (U) au moyen de l'au moins un balai de bague collectrice (1.2) et la surface active (W) de l'élément structural (2.6) est orientée parallèlement à la surface (U).

7. Unité de bagues collectrices selon la revendication 4, **caractérisée en ce que** l'élément structural (2.6) comprend une surface active périphérique (W) et l'au moins une bague collectrice (2.2) peut être mise en contact le long d'une surface (U) au moyen de l'au moins un balai de bague collectrice (1.2) et la surface active (W) de l'élément structural (2.6) est orientée parallèlement à la surface (U).

8. Unité de bagues collectrices selon l'une quelconque des revendications 4, 5, 6 ou 7, **caractérisée en ce que** le deuxième groupe de composants (2) comprend plusieurs bagues collectrices (2.2) qui sont juxtaposées de manière à présenter un espacement axial et l'élément structural (2.6) est inséré dans la suite des bagues collectrices (2.2).

9. Unité de bagues collectrices selon l'une quelconque des revendications précédentes, **caractérisée en ce que** le dispositif de transport d'air (1.5) est configuré sous forme de pompe à déplacement positif, en particulier sous forme de compresseur à membrane.

10. Unité de bagues collectrices selon l'une quelconque des revendications précédentes, **caractérisée en ce qu'**un palier à roulement (3) est disposé entre les groupes de composants (1, 2) pouvant tourner relativement l'un par rapport à l'autre, lequel palier à roulement comprend un joint d'étanchéité (3.4).

11. Utilisation de l'unité de bagues collectrices selon l'une quelconque des revendications précédentes dans une nacelle d'une éolienne, en particulier pour la transmission de courants pour des entraînements électriques d'un réglage de pales de rotor.
